# FASCICULE DE BREVET EUROPEEN

(11) **EP 1 766 373 B1**
(45) Date de publication et mention de la délivrance du brevet: **02.01.2013**
(21) Numéro de dépôt: 05777324.4
(22) Date de dépôt: 09.06.2005
(51) Int. Cl.: G01N 21/64, A61B 5/00, G02B 5/00, G02B 21/00, G02B 23/26

(54) **PROCEDE ET SYSTEME D'IMAGERIE MICROSCOPIQUE DE FLUORESCENCE FIBREE MULTIMARQUAGE**
FLUORESZENZMIKROSKOPISCHES ABBILDUNGSSYSTEM UND VERFAHREN MIT FASERN UND MEHRFACHMARKIERUNG
MULTIMARKING FIBER FLUORESCENCE MICROSCOPIC IMAGERY SYSTEM AND METHOD

(30) Priorité: 14.06.2004 FR 0406396
(43) Date de publication de la demande: 28.03.2007
(73) Titulaire: Mauna Kea Technologies, 75010 Paris (FR)
(72) Inventeur: VIELLEROBE, Bertrand, F-94130 Nogent sur Marne (FR); JEAN, Florence, F-77400 Dampmart (FR); BOURG-HECKLY, Geneviève, F-75003 Paris (FR); LOISEAU, Alexandre, F-75009 Paris (FR)
(74) Mandataire: Pontet, Bernard
(86) Numéro de dépôt international: PCT/FR2005/001424
(87) Numéro de publication internationale: WO 2006/000704

(56) Documents cités:
- DE-A1- 10 231 776
- US-A- 5 127 730
- US-A1- 2003 016 897
- ROUSE A R ET AL: "MULTISPECTRAL IMAGING WITH A CONFOCAL MICROENDOSCOPE" OPTICS LETTERS, OPTICAL SOCIETY OF AMERICA, WASHINGTON, US, vol. 25, no. 23, 1 décembre 2000 (2000-12-01), pages 1708-1710, XP000981049 ISSN: 0146-9592

## Description

La présente invention se rapporte à un procédé et un système pour réaliser une image microscopique fibrée de fluorescence d'un échantillon. Le domaine d'application visé est plus particulièrement celui de l'imagerie in vivo et in situ.

La fluorescence observée peut provenir d'un composé exogène (typiquement un marqueur administré) ou fabriqué par des cellules (de type marqueur transgénique) d'un tissu biologique.

On connaît le document US6148227 décrivant un système d'autofluorescence des tissus. Un faisceau lumineux excite un fluorophore endogène du tissu. Le signal émis est séparé en un signal rouge et en un signal vert. Ces signaux sont ensuite traités de façon électronique pour obtenir une image bicolore. Le document US6343228 décrit un système d'imagerie de fluorescence dans lequel l'image de fluorescence est normalisée à partir d'une image de réflectance. Le système comprend une première voie pour exciter le fluorophore endogène du tissu et une seconde voie pour récupérer le signal émis par fluorescence et réflectance. Le document WO 0043552 décrit un circuit intégré, nommé "biochip", ayant pour but de détecter plusieurs composés chimiques. Ce biochip comprend de nombreux capteurs dont un détecteur de fluorescence. Un laser ou une diode électroluminescente émet un faisceau lumineux pour exciter un élément cible qui, en réaction, génère un signal de façon inhérente ou par injection d'un marqueur approprié. Le signal émis peut être un signal de fluorescence, de phosphorescence ou de diffusion Raman. Les chemins optiques entre le flux incident et le signal émis par l'élément cible sont différents.

L'inconvénient de l'art antérieur décrit ci-dessus, est qu'aucun de ces trois documents ne permet notamment de réaliser ni une image confocale fibrée ni une image fibrée de haute résolution.

La présente invention vise particulièrement un système d'imagerie microscopique fibrée dans lequel on balaye un échantillon au moyen d'un signal d'excitation via un chemin optique, et on détecte le signal de fluorescence en provenance dudit échantillon, le signal d'excitation et le signal de fluorescence empruntant ce même chemin optique. Contrairement au microscope dit de table, le système d'imagerie microscopique, en particulier dans le domaine de l'endoscopie conformément à un objectif d'application de la présente invention, permet d'obtenir une image déportée conservant une résolution microscopique.

Dans l'état de la technique antérieur, on peut enfin citer le document WO 2004/008952 qui propose un procédé pour réaliser une image confocale de fluorescence in vivo in situ, de façon à optimiser la qualité de chaque image et obtenir une excellente résolution latérale et axiale. Selon un premier aspect de ce procédé pour la réalisation d'une image confocale, on utilise un guide d'image fait de plusieurs milliers de fibres optiques et consistant à balayer point par point dans un plan, en particulier subsurfacique, d'un échantillon, chaque point correspondant à un signal d'excitation émis par une source continue, dévié et injecté dans l'une des fibres optiques du faisceau puis focalisé, notamment à l'aide d'une tête optique, à la sortie de la fibre dans le plan, chaque point émettant en retour un signal de fluorescence collecté par la fibre optique, puis détecté et numérisé pour former un élément d'image. Le caractère confocal est obtenu en utilisant la tête optique pour focaliser le faisceau dans l'échantillon, et en utilisant comme trou de filtrage spatial la même fibre optique pour transporter le signal d'excitation et le signal de fluorescence émis en réaction.

Selon un second aspect de ce procédé pour la réalisation d'une image de fluorescence haute résolution, non confocale, par rapport au premier aspect, on place ici l'extrémité des fibres à nue directement en contact de la surface de l'échantillon à imager, chaque fibre étant adaptée à produire un faisceau divergent susceptible d'exciter un micro-volume de l'échantillon situé de la surface jusqu'à une profondeur maximale dépendante notamment du diamètre de coeur des fibres optiques. Les images obtenues ne sont pas « confocales » car elles ne proviennent pas d'un plan de coupe subsurfacique balayé point à point. On peut toutefois les qualifier d'images « hautement résolues » car provenant du balayage tour à tour de microvolumes situés directement sous la surface et d'un filtrage spatial du signal de fluorescence émis par chaque microvolume par la même fibre que celle ayant servie à l'excitation.

Dans tous les cas, pour les deux aspects, on dévie le signal d'excitation à une vitesse correspondant à l'acquisition d'un nombre d'images par seconde suffisant pour une utilisation en temps réel et on détecte le signal de fluorescence à une fréquence de détection correspondant à une fréquence minimale d'échantillonnage des fibres une à une. Le respect de l'échantillonnage des fibres (selon le critère de Shannon) permet d'obtenir une image point à point correspondant bien à chaque fibre. Cela permet de ne pas perdre d'information en échantillonnant l'ensemble des fibres une à une tout en respectant un nombre moyen minimal d'images par seconde, à savoir en pratique au minimum 12 images par secondes pour un mode maximal de 896 x 640 pixels. Le choix de la fréquence de détection (bande passante du détecteur) en fonction de cet échantillonnage minimal permet ensuite pour chaque fibre de détecter le plus grand nombre possible de photons de fluorescence. Ainsi, selon un mode de réalisation possible, mettant en oeuvre un guide d'image d'environ 30 000 fibres optiques souples, la fréquence d'échantillonnage et la bande passante du système de détection (une photodiode à avalanche ou équivalent) sont fixés sensiblement à 1,5 MHz, correspondant environ à 12 pixels par fibre, permettant alors d'obtenir au minimum les 12 images/s en mode maximal 896 x 640 pixels. En pratique, la déviation du faisceau est réglée en déterminant une fréquence de résonance rapide d'un miroir résonnant "ligne" et une fréquence de résonance lente d'un miroir galvanométrique "trame". Ceci permet un balayage rapide approprié des fibres pour obtenir une image en temps réel.

L'article « multispectral imaging with a confocal microendoscope », Andrew R. Rouse and Arthur F. Gmitro, Optics Letters, Vol. 25, No. 23, December 1, 2000, pages 1708-1710, divulgue un procédé pour réaliser une image multispectrale microscopique fibrée de fluorescence d'un échantillon.

La présente invention a pour but d'enrichir en information les images obtenues par un système d'imagerie confocale de fluorescence. Un autre but de l'invention est le suivi de l'évolution comportementale d'éléments bien identifiés.

On atteint au moins l'un des buts précités avec un procédé selon la revendication 1.

Le signal d'excitation peut être issu de plusieurs autres signaux de longueurs d'ondes différentes.

La présente invention permet ainsi de réaliser un multimarquage, c'est à dire que l'on détecte dans l'échantillon qui peut être un tissu humain ou animal, au moins deux fluorophores, autrement dit colorants ou marqueurs. Chaque fluorophore émet un signal d'une longueur d'onde donnée lorsqu'il est excité par un faisceau lumineux adéquat. De préférence, les signaux de fluorescence émis par lesdits au moins deux fluorophores présentent des longueurs d'onde suffisamment éloignées l'une de l'autre de façon à ce que ces signaux de fluorescence soient dissociables par filtrage spectral. Toutefois lorsque les signaux de fluorescence émis par lesdits au moins deux fluorophores présentent des bandes de longueurs d'onde qui se superposent en totalité ou en partie, la discrimination peut se faire, comme on le verra ci-après, par émission séquentielle, détection fine par filtrage en cas de chevauchement ou détection séquentielle en cas de superposition totale.

Avec le procédé selon l'invention, chaque fluorophore injecté peut marquer un élément précis. Ce fluorophore peut effectivement être administré (fluorophore exogène) ou être d'emblée présent dans l'échantillon. Le dernier cas comprend par exemple tout animal transgénique exprimant un ou plusieurs fluorophores. L'image obtenue fait donc apparaître ces différents éléments avec des couleurs différentes. Ces couleurs peuvent être arbitraires, c'est à dire des "fausses" couleurs, ou alors des couleurs correspondant effectivement aux longueurs d'onde des signaux de fluorescence émis par les fluorophores. En visualisant l'image, notamment en temps réel, on peut suivre l'évolution des éléments. On peut par exemple appliquer des stimuli de façon à visualiser la réaction de chaque élément. Le multimarquage permet d'obtenir une image distinguant clairement, par des couleurs différentes, les différents éléments marqués. L'image finale peut comporter autant de couleurs que de fluorophores injectés. Ainsi, un premier fluorophore peut avoir un rôle morphologique ou spatial, c'est à dire marquer l'architecture cellulaire par exemple, mettre en évidence l'ossature, le contenant. Un second fluorophore peut avoir un rôle fonctionnel tel que marquer les protéines ou ions de façon à suivre leur activité, et ainsi pister le contenu. A titre d'exemple, on peut visualiser l'activité du calcium, marqué par un premier fluorophore, dans des neurones marqués par un second fluorophore. On peut par exemple déterminer aisément le rapport nucléo-cytoplasmique (surface noyau sur surface cellule) en marquant l'un et l'autre avec deux fluorophores selon l'invention. L'homme du métier comprendra aisément que chaque fluorophore peut avoir un rôle fonctionnel, morphologique ou autre.

La présente invention peut avoir de nombreuses applications, en particulier là où on requiert des procédés non ou peu invasifs. Ces applications sont par exemple l'endoscopie urétrale lorsqu'une sonde optique avec un diamètre inférieur à 1mm est insérée dans une vessie par exemple; la colonoscopie du petit animal; la visualisation de la cornée et de la rétine; la visualisation des fibres musculaires et des nerfs; la microcirculation des leucocytes et du flux sanguin; l'architecture vasculaire et rénale; les membranes d'hépatocytes; et la neurobiologie in situ pour la visualisation des structures cérébrales profondes du petit animal vivant par exemple.

Selon un mode de mise en oeuvre avantageux de l'invention, on excite simultanément lesdits au moins deux fluorophores. En outre, lorsqu'on détecte simultanément les signaux de fluorescence desdits au moins deux fluorophores, on peut ainsi faire du temps réel, par exemple douze images par seconde. La présente invention autorise ainsi une acquisition in vivo et in situ.

De façon alternative, on peut exciter séquentiellement lesdits au moins deux fluorophores. Les fluorophores sont donc excités les uns après les autres. Dans le cas où on injecte deux fluorophores et on utilise un système d'acquisition d'images en temps réel de douze images par seconde, on obtient une image finale cadencée à six images par seconde.

On peut également détecter de façon séquentielle les signaux de fluorescence desdits au moins deux fluorophores.

On comprend bien que la mise en oeuvre préférée s'appuie donc sur des émissions simultanées pour des détections simultanées de façon à obtenir une image finale en temps réel. A titre d'exemple, on peut utiliser deux émetteurs lasers émettant sur deux longueurs d'ondes différentes pour exciter deux fluorophores émettant également sur deux longueurs d'ondes différentes.

Avantageusement, dans tous les cas, on balaye l'échantillon à une vitesse correspondant à l'acquisition d'un nombre d'images par seconde suffisant pour une utilisation en temps réel. De plus, on détecte les signaux de fluorescence à une fréquence de détection correspondant à une fréquence minimale d'échantillonnage des fibres une à une. Le balayage reste à la vitesse temps réel, c'est l'élaboration de l'image finale qui dépend du mode de détection : simultanée ou séquentielle.

De préférence, pour élaborer ladite image finale, on élabore d'abord autant d'images primaires que de signaux de fluorescence détectés, on colore chaque image primaire suivant une couleur affectée au fluorophore correspondant, puis on superpose lesdites images primaires de façon à constituer l'image finale. L'étape de superposition peut aussi être une fusion ou une transparence 50/50.

Selon l'invention, on acquiert un spectre (intensité en fonction de la longueur d'onde) de chaque image à partir d'une partie du signal provenant de l'échantillon via le chemin optique.

Suivant une variante et pour une image donnée, on acquiert en outre un spectre uniquement d'une zone d'intérêt à partir d'une partie du signal provenant de l'échantillon via le chemin optique. L'analyse spectrale d'une zone donnée dans le temps apporte une information pertinente supplémentaire à l'image finale. On peut ainsi suivre et déterminer de façon exhaustive l'évolution des éléments marqués ainsi que leur réaction face à des stimuli.

En pratique, pour la réalisation du spectre, on prélève environ vingt-pour-cent du signal provenant de l'échantillon de façon à ne pas compromettre la qualité des images.

Selon l'invention, on détermine lesdites zones d'intérêts, préalablement à l'acquisition dudit spectre, en réalisant une première phase d'acquisition d'image, puis en définissant lesdites zones d'intérêt sur l'image obtenue.

En outre, pour acquérir le spectre uniquement sur des zones d'intérêts d'une image, on peut utiliser un obturateur ou commutateur, communément nommé "shutter" en langue anglaise, dirigeant une partie du signal provenant de l'échantillon vers un spectromètre à des instants prédéterminés correspondant aux instants où le signal d'excitation balaye ladite zone d'intérêt. D'autres commutateurs rapides peuvent être utilisés tels qu'un miroir piloté ou un déflecteur acousto-optique.

On peut aussi utiliser un laser pulsé haute fréquence pour émettre le signal d'excitation, ce laser pulsé étant rendu actif uniquement pour le balayage de ladite zone d'intérêt.

La présente invention a également pour objet un système selon la revendication 8.

De préférence, le système selon l'invention utilise comme base, l'appareil tel que décrit dans le document WO 2004/008952 de Mauna Kea Technologies.

Le balayage du signal d'excitation peut se faire dans un plan subsurfacique, surfacique ou dans un volume de l'échantillon.

Les moyens d'excitation peuvent comprendre un émetteur, tel qu'un laser par exemple, apte à exciter simultanément lesdits au moins deux fluorophores. En effet il existe des dispositifs lasers, émettant notamment à 405nm, capables d'exciter deux fluorophores à la fois. Dans ce cas, à la réception, on peut disposer un photodétecteur détectant les signaux de fluorescence de façon séquentielle, ou bien deux photodétecteurs (autant de photodétecteurs que de fluorophores) détectant simultanément les signaux de fluorescence lorsque ces derniers sont spectralement dissociables.

De préférence, les moyens d'excitation comprennent au moins deux émetteurs (deux lasers notamment), excitant, simultanément ou séquentiellement, lesdits au moins deux fluorophores. Dans ce cas, chaque émetteur est apte à exciter de préférence un unique fluorophore.

Idéalement on dispose autant d'émetteurs que de détecteurs afin d'exciter et détecter de façon simultanée et d'élaborer une image en temps réel (douze images par seconde).

Les deux émetteurs de signaux d'excitation sont avantageusement deux lasers émettant respectivement à 488nm et 635nm, les deux fluorophores dans l'échantillon réagissant respectivement à ces deux longueurs d'onde.

Dans un autre mode de réalisation, les moyens de détection peuvent comprendre un récepteur, tel qu'un photodétecteur notamment, associé à un moyen de filtrage, un filtre passe-bande accordable par exemple, qui laisse passer séquentiellement chacun des signaux de fluorescence émis par lesdits au moins deux fluorophores.

Mais, de façon préférentielle, les moyens de détection comprennent plutôt au moins deux récepteurs associés à un séparateur tel qu'un filtre dichroïque qui est apte à envoyer, en fonction de la longueur d'onde, chaque signal de fluorescence vers un récepteur donné.

Dans un mode de détection multi-voies, on peut utiliser plusieurs filtres passe-bande accordables et/ou plusieurs filtres dichroïques accordables. De même en émission, on peut utiliser un seul laser émettant à plusieurs longueurs d'ondes de façon simultanée.

Avantageusement, les moyens de balayage balayent l'échantillon à une vitesse correspondant à l'acquisition d'un nombre d'images par seconde suffisant pour une utilisation en temps réel. En outre, les moyens de détection détectent les signaux de fluorescence à une fréquence de détection correspondant à une fréquence minimale d'échantillonnage des fibres une à une.

Selon un mode de réalisation préféré, le guide d'image est constitué de plusieurs milliers de fibres optiques, ce guide étant précédé par les moyens de balayage et suivi d'une tête optique pour focaliser le signal d'excitation dans l'échantillon.

Selon une variante de réalisation, le guide d'image peut être constitué d'une fibre optique, les moyens de balayage étant intégrés dans la tête optique située entre le guide d'image et l'échantillon.

Selon une autre variante de réalisation, le guide d'image peut être constitué de plusieurs milliers de fibres optiques dont les extrémités distales sont destinées à être placées à nue directement en contact de la surface de l'échantillon. Dans ce cas, chaque fibre est adaptée à produire un faisceau divergent susceptible d'exciter un micro-volume de l'échantillon situé de la surface jusqu'à une profondeur maximale dépendante notamment du diamètre de coeur des fibres optiques.

Le système peut comprendre en outre un spectromètre apte à élaborer un spectre à partir d'une partie du signal provenant de l'échantillon. On réalise ainsi un couplage entre un système d'imagerie de fluorescence, notamment confocale, fibrée et une voie d'analyse spectroscopique. Ce spectromètre peut être associé à un obturateur ou "shutter" dirigeant une partie du signal provenant de l'échantillon vers le spectromètre à des instants prédéterminés correspondant aux instants où le signal d'excitation balaye une zone d'intérêt. Autrement, pour acquérir le spectre uniquement sur une zone d'intérêt d'une image, les moyens d'excitation peuvent comprendre au moins un laser pulsé haute fréquence, ce laser pulsé étant rendu actif uniquement lors du balayage de ladite zone d'intérêt. On remarque que la spectroscopie est également confocale lorsqu'on utilise un système d'acquisition d'image confocale. Elle est également de haute résolution, non confocale, lorsqu'on utilise un système d'acquisition d'image haute résolution non confocale.

Selon l'invention, l'unité de traitement comprend des moyens de synchronisation des moyens d'excitation et des moyens de réception.

Selon l'invention, le traitement d'image réalisé ensuite sur le flux détecté est optimisé, pour obtenir une image de très bonne qualité à partir du flux limité de photons détecté. Cette optimisation est réalisée de la manière suivante.

Une série d'étapes est réalisée préalablement à l'acquisition d'images en temps réel :
- une étape de détection de l'emplacement de chaque fibre d'un ensemble choisi de fibres destinés à être utilisées (soit l'ensemble du guide d'image soit un sous-ensemble choisi) ; cette étape est à réaliser au moins à chaque changement de guide d'image ;
- une étape d'étalonnage du taux d'injection dans chaque fibre, c'est à dire de définition d'un taux d'injection propre à chaque fibre ; et
- une étape de détection de l'image de fond (sans échantillon).

En fonctionnement, l'optimisation du traitement d'image comprend notamment les étapes consistant, après numérisation du signal détecté :
- à définir le flux réel collecté par chaque fibre c'est-à-dire ne provenant que de l'échantillon, après correction en fonction du taux d'injection propre de la fibre et de la soustraction de l'image du fond, de manière à obtenir un signal corrigé;
- puis à effectuer une reconstruction de l'image à partir de ce signal corrigé, avec pour but notamment de transformer une image présentant une mosaïque de fibres en une image sans fibres apparentes.

Selon l'invention, ces deux dernières étapes sont avantageusement réalisables en temps réel. Pour ce qui est de la correction du signal, celle-ci peut se faire en temps réel grâce à un traitement adapté à la structure du signal observé et un algorithme optimisé. Pour ce qui est de la reconstruction de l'image, elle peut se faire grâce au choix d'un nombre d'opérations par pixel réalisables en temps réel permettant d'obtenir le résultat recherché en terme de qualité d'image. Un filtrage passe-bas Gaussien représente un bon compromis entre la complexité du traitement, la qualité du résultat et le temps de calcul.

D'autres avantages et caractéristiques de l'invention apparaîtront à l'examen de la description détaillée d'un mode de mise en oeuvre nullement limitatif, et des dessins annexés, sur lesquels :
- La figure 1 est une vue schématique du système d'acquisition selon l'invention;
- La figure 2 est une vue schématique illustrant l'élaboration d'une image finale selon l'invention à partir de deux images primaires mettant en évidence chacune des éléments colorés par un fluorophore donné;
- La figure 3 est également une vue schématique illustrant l'élaboration d'une autre image finale selon l'invention à partir de deux autres images primaires mettant en évidence chacune des éléments colorés par un fluorophore donné; et
- La figure 4 est une vue schématique d'un commutateur acousto-optique.

On va maintenant décrire, de façon non limitative, le système selon l'invention pour la réalisation d'image confocale haute définition dans le cas de deux fluorophores présents dans l'échantillon. Ce dernier peut être un tissu biologique ou une culture cellulaire.

Le système comprend deux voies d'excitation et deux voies de détection de façon à réaliser efficacement des images en temps réel. Pour chaque voie, la source lumineuse 1, 2 est un laser émettant à une longueur d'onde d'excitation permettant d'exciter un fluorophore donné, par exemple 488 nm et 635 nm respectivement. Chaque source lumineuse est apte à exciter un fluorophore. Pour optimiser l'injection dans l'une des fibres du guide d'image 6, le faisceau d'excitation est circulaire pour pouvoir injecter une fibre de section également circulaire et, pour optimiser le taux d'injection, le laser est de préférence monomode longitudinal pour présenter le meilleur front d'onde possible pour l'injection dans une fibre optique faiblement multimode. La puissance disponible en sortie du laser est d'au moins 20mW. Pour l'acquisition d'images, le laser peut émettre de manière continue et stable (bruit le plus faible possible, <1%). A titre d'exemples, on peut utiliser un laser à puits quantiques (VCSEL), un laser solide pompé par diode, une diode laser ou encore un laser à gaz tel que l'Argon. Dans le cas présent et comme on le verra plus loin, chaque laser peut être utilisé en mode pulsé à une fréquence supérieure à 100 MHz, ceci pour réaliser des spectroscopies uniquement sur des zones d'intérêts.

En sortie de la source 1, 2, sont placés les moyens "expanseur" 3, 4 de mise en forme du faisceau laser d'excitation. Ils sont constitués d'un système optique afocal de grandissement différent de 1, composé de lentilles qui permettent de modifier le diamètre du faisceau laser. Le grandissement est calculé de sorte que le diamètre du faisceau est adapté aux moyens d'injection 10 dans une fibre.

Le faisceau laser d'excitation remis en forme est ensuite dirigé vers les moyens 5, 6 prévus pour séparer les longueurs d'ondes d'excitation et de fluorescence. Il s'agit par exemple d'un filtre dichroïque ayant une efficacité de transmission de 98 à 99 % à la longueur d'onde d'excitation et qui réfléchit donc sensiblement les autres longueurs d'onde. Le signal de fluorescence, empruntant au retour le même chemin optique que le signal d'excitation, sera ainsi envoyé vers la voie de détection 15, 18. Les moyens de réjection 11, 12, placés sur la voie de détection servent à éliminer totalement les 1 à 2 % de réflexions parasites à la longueur d'onde d'excitation 488 nm et 635 nm respectivement, qui passent vers la voie de détection (par exemple deux filtres de réjection à 488 nm et 635 nm respectivement).

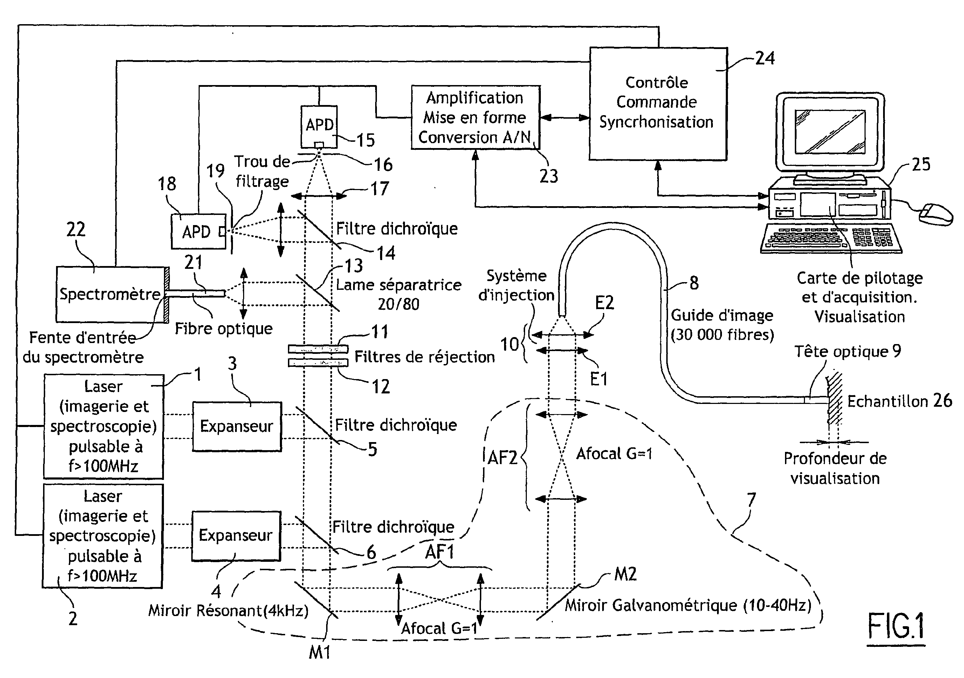

Les moyens de balayage 7 reprennent ensuite le faisceau d'excitation. Selon l'exemple choisi et représenté sur la figure 1, ces moyens comprennent un miroir M1 résonant à 4 KHz servant à dévier le faisceau horizontalement et donc à réaliser les lignes de l'image, d'un miroir M2 galvanométrique à 15 Hz, en général entre 10 et 40 Hz, servant à dévier le faisceau verticalement et donc à réaliser la trame de l'image ; et de deux systèmes afocaux de grandissement unitaire, AF1 situé entre les deux miroirs et AF2 situé après le miroir M2, ces systèmes afocaux étant utilisés pour conjuguer les plans de rotation des deux miroirs M1 et M2 avec le plan d'injection dans l'une des fibres. Selon l'invention, la vitesse de balayage est déterminée pour permettre une observation des tissus in vivo in situ. Pour cela, le balayage doit être suffisamment rapide pour qu'il y ait au moins 12 images / s affichées à l'écran pour un mode d'affichage de 896 x 640 pixels correspondant au mode le plus lent. Pour les modes d'affichage ayant moins de pixels, le nombre d'images acquises par seconde sera ainsi toujours supérieur à 12 images / s. En variante, les moyens de balayage peuvent comprendre notamment un miroir rotatif, des composants intégrés de type MEMs (miroirs de balayage X et Y), ou un système acousto-optique.

Le faisceau d'excitation dévié en sortie des moyens de balayage est dirigé vers les moyens optiques 10 afin d'être injecté dans l'une des fibres du guide d'image 8. Ces moyens 10 sont constitués ici de deux ensembles optiques E1 et E2. Le premier ensemble optique E1 permet de corriger en partie les aberrations optiques en bord de champ des moyens de balayage 7, l'injection étant ainsi optimisée sur l'ensemble du champ optique (au centre comme au bord). Le second ensemble optique E2 est destiné à réaliser l'injection proprement dite. Sa focale et son ouverture numérique ont été choisies pour optimiser le taux d'injection dans les fibres optiques du guide 8. Selon un mode de réalisation permettant d'obtenir le critère d'achromaticité, le premier ensemble E1 est constitué d'un doublet de lentilles, et le second ensemble E2 de deux doublets de lentilles suivi d'une lentille située près du guide d'image. En variante, cette optique d'injection pourrait être constituée de tout autre type d'optiques standards, comme par exemple deux triplets, ou de lentilles à gradient d'indice (avec une correction du chromatisme par des éléments optiques diffractifs) ou bien d'un objectif de microscope (toutefois plus coûteux).

Le guide d'image 8 est constitué d'un très grand nombre de fibres optiques souples, par exemple 30 000 fibres de 2 µm de diamètre et espacées de 3,3 µm. En pratique, on peut utiliser soit l'ensemble des fibres du guide d'image, soit un sous-ensemble choisi de ces fibres, par exemple centré.

En sortie de la fibre optique, le faisceau laser d'excitation est focalisé par la tête optique 9 dans l'échantillon 26 en un point situé à une profondeur donnée située entre quelques dizaines de µm et une centaine de µm, par rapport à la surface de l'échantillon au contact de laquelle est destinée à être placée la tête optique 9. Cette profondeur peut être par exemple de 40 µm. La tête optique permet donc de focaliser le flux sortant du guide d'image dans l'échantillon, mais également de collecter le flux de fluorescence revenant de l'échantillon. La tête optique possède un grandissement de 2,4 et une ouverture numérique sur l'échantillon de 0,5. Ces deux paramètres sont choisis afin que le signal de retour se fasse uniquement dans la fibre optique ayant transmis le signal d'excitation et non pas dans des fibres adjacentes et conserver ainsi le filtrage confocal à l'aide d'une fibre. Avec ces valeurs de grandissement et d'ouverture numérique, la résolution axiale est de l'ordre de 15 µm et la résolution latérale de l'ordre de 2 µm. L'ouverture numérique est également choisie de manière à optimiser le nombre de photons récupérés qui doit être le plus important possible. La tête optique peut être constituée d'optiques classiques (doublet, triplet, asphérique) et/ou de lentilles à gradient d'indice (GRIN) présentant une qualité optique et un chromatisme adaptés à la confocalité, c'est à dire minimisant les aberrations optiques, qui entraîneraient sinon notamment des dégradations sur la profondeur de champ et par conséquent sur la résolution axiale de l'appareillage. En fonctionnement, la tête optique est destinée à être posée au contact de l'échantillon 26. L'expression de la fluorescence est réalisée soit par un fluorophore que l'on injecte (fluorescence systémique), soit par un fluorophore fabriqué par la cellule elle même par modification d'un gêne (fluorescence transgénique). Dans le cas présent, les deux fluorophores sont injectés et re-émettent des photons sur une bande spectrale de largeur comprise entre 50 et 200nm, en particulier 100nm.

Sur la voie de détection, en sortie du filtre de réjection 11, 12, les deux signaux de fluorescence sont séparés, par sélection de longueurs d'onde, par un filtre dichroïque 14. Chaque signal de fluorescence est ensuite focalisé par les moyens 17, 20 respectivement, constitués par exemple d'une lentille de détection, dans un trou de filtrage des moyens 16, 19 respectivement de filtrage spatial. La focale de la lentille de détection est calculée pour que le signal de fluorescence provenant d'une fibre soit de la taille ou légèrement inférieure à celle du trou de filtrage. Ce dernier permet de conserver la lumière de fluorescence ne provenant que de la fibre illuminée par le faisceau incident. Il permet de rejeter la lumière qui aurait pu être couplée dans les fibres adjacentes à celle qui est illuminée. La taille du trou est calculée pour que l'image d'une fibre s'y inscrive parfaitement. Ici, elle est de 20 µm.

Les filtres utilisés présente une bande passante suffisamment sélective pour pouvoir séparer les signaux de fluorescence et suffisamment large pour capter un maximum de photons nécessaire à une acquisition en temps réel.

Les moyens de détection 15, 18 ont une sensibilité maximale aux longueurs d'onde de fluorescence étudiées. On peut utiliser par exemple une photodiode à avalanches (APD) ou bien un photomultiplicateur. Par ailleurs, selon l'invention, la bande passante est choisie pour optimiser le temps d'intégration du signal de fluorescence. Elle est de 1,5 MHz, ce qui correspond à la fréquence d'échantillonnage minimale du guide d'image avec un temps d'intégration optimisé sur chaque pixel.

Les moyens électroniques et informatiques 25 (tel qu'un micro-ordinateur) de commande, d'analyse et de traitement numérique du signal détecté et de visualisation comprennent les cartes suivantes :
- une carte de synchronisation 24 qui a pour fonction
   - de commander de manière synchronisée le balayage, c'est-à-dire le mouvement des miroirs ligne M1 et trame M2 ;
   - de commander de manière synchronisée avec les images de fluorescence, l'analyse spectrale des données en provenance d'un spectromètre 22;
   - de connaître à tout instant la position du spot laser ainsi balayé ; et
   - de gérer toutes les autres cartes par l'intermédiaire d'un micro-contrôleur lui-même pouvant être piloté ;
- une carte détecteur 23 qui comprend pour chaque voie de détection un circuit analogique qui réalise notamment une adaptation d'impédance, un amplificateur, un convertisseur analogique numérique puis un composant logique programmable (par exemple un circuit FPGA) qui met en forme le signal.

Le micro-ordinateur 25 comprend également une carte d'acquisition numérique (non représentée) qui permet de traiter un flot de données numériques à fréquence variable et de l'afficher sur un écran au moyen d'une carte graphique (non représentée).

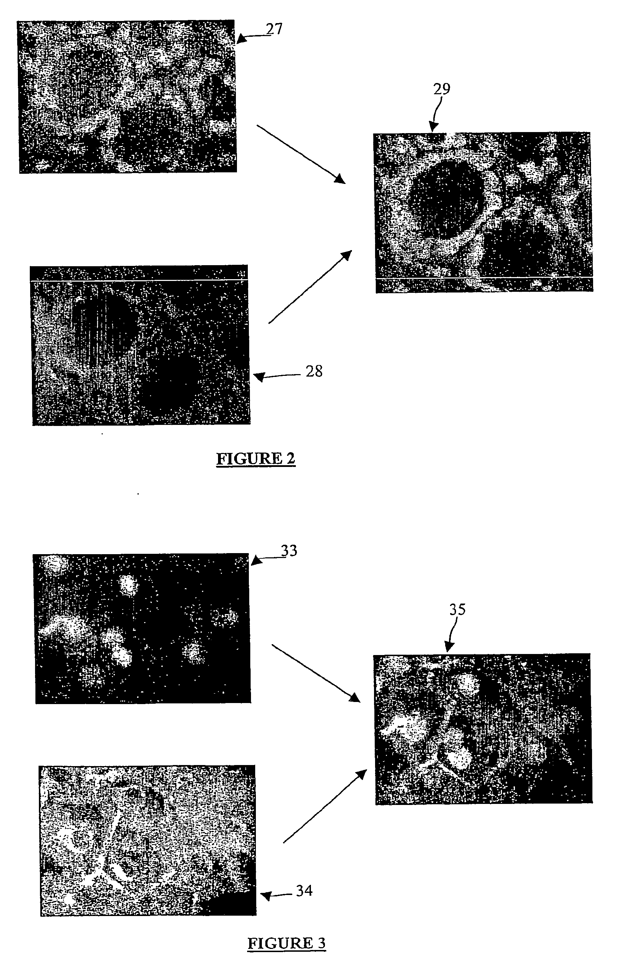

Le système selon la présente invention permet de mettre en oeuvre un traitement d'image tel que décrit notamment dans le document WO 2004/008952 et/ou le document WO 2004/010377. Ce traitement d'image permet d'obtenir simultanément en temps réel pour chaque voie de détection, une image primaire 27, 28 mettant en évidence des substances marquées, voir figure 2. Les images 27, 28 et 29 correspondent à un tissu glandulaire prélevé par biopsie. Plus précisément, ce tissu provient d'une thyroïde humaine. Ces images laissent apparaître des cryptes glandulaires. La présente invention, avec le système de la figure 1, permet donc l'acquisition en simultané de deux images dans deux bandes de longueurs d'onde différentes.

L'image primaire 27 fait apparaître des taches de formes circulaires et de couleur bleue. La couleur bleue est choisie de façon arbitraire. Ces taches correspondent aux signaux de fluorescence émis par le premier fluorophore nommé To-pro-3 et qui est apte à être excité par un faisceau laser à 635nm. Il s'agit d'un intercalant de l'ADN. Ce fluorophore permet d'identifier le noyau d'une cellule du fait de la présence d'ADN dans les noyaux.

L'image primaire 28 fait apparaître une architecture de couleur arbitraire rouge, définissant des zones spatiales bien particulières. Ces zones correspondent aux signaux de fluorescence émis par le second fluorophore nommé DiA et qui est apte à être excité par un faisceau laser à 488nm. Ce fluorophore a une affinité très forte avec les lipides (acides gras) contenus dans les membranes cytoplasmiques des cellules. Les zones visibles sur les images correspondent donc aux membranes visibles dans le champ de l'image. Selon l'invention, les deux images primaires sont ensuite superposées pour former une image finale 29 faisant apparaître, sur la figure 2, à la fois les éléments bleus et rouges. Cela permet de mieux délimiter les noyaux bleus au sein des membranes rouges.

De la même manière sur la figure 3, les images 33, 34 et 35 représentent un tissu malpighien provenant d'un col utérin. Sur l'image 33, les taches visibles, colorées en bleue, correspondent à l'ADN des noyaux cellulaires. Le marqueur utilisé est le POPO-1 excité à 405 nm. Sur la figure 34, la structure en "nid d'abeille", colorée en rouge, correspondent aux membranes nucléaire et cytoplasmique. Le marqueur utilisé est le DiA excité à 488 nm. Sur l'image 35, on voit la superposition des deux images 33 et 34. On distingue bien les noyaux au sein de leur membrane cytoplasmique.

Avantageusement, les voies d'acquisition d'images de fluorescence sont couplées à une voie spectrale. Le spectromètre 22 sur la figure 1 permet de réaliser une analyse spectrale de toute ou partie d'une image.

Le suivi temporel et spectral d'un signal de fluorescence peut donner des renseignements très importants sur l'activité biochimique fonctionnelle d'un tissu biologique. En effet, les fluorophores utilisés pour réaliser la ou les images de fluorescence sont très sensibles à leur environnement proche (on peut notamment choisir des fluorophores "intelligents" qui réagissent particulièrement à des changements de leur environnement immédiat ou qui interagissent spécifiquement avec des espèces moléculaires bien particulières). Le niveau de leur fluorescence (intensité) et la forme de leur fluorescence (spectre) varient en fonction des changements qui s'opèrent dans le milieu environnant. L'étude dans le temps de l'intensité et du spectre de la fluorescence renseigne donc sur la dynamique du milieu biologique. Dans ce cas, le suivi de l'action d'un médicament ou le suivi de l'activité métabolique ou encore le suivi de l'action d'un stress extérieur (changement de pH, de température, d'activité enzymatique...) peuvent être enregistrés grâce à l'analyse spectrale et temporelle de la fluorescence. L'avantage d'un tel couplage se situe notamment au niveau de l'analyse plus fine de la fluorescence. Plusieurs cas d'analyse peuvent être envisagés :
- le suivi temporel et spectral de la fluorescence d'une image : dans ce cas, l'analyse spectrale s'applique à toute l'image. C'est une première analyse assez grossière de la zone observée dans son ensemble;
- le suivi temporel et spectral de la fluorescence d'une zone d'intérêt d'une image : ce cas, beaucoup plus intéressant, représente l'analyse d'une zone particulière de l'image. Il faut donc faire une analyse préalable de l'image confocale de fluorescence pour déterminer les zones dites "d'intérêt" et ensuite faire l'analyse spectrale de ces zones. Il y a donc nécessité de synchroniser l'analyse par l'image et l'analyse spectrale; et
- le suivi temporel et spectral de l'autofluorescence d'une image : dans ce dernier cas, il s'agit de l'analyse de l'autofluorescence du tissu. Dans ce cas particulier, on utilise un laser dans le bleu. De plus, la fluorescence induite par des fluorophores exogènes ne doit pas empêcher la détection de l'autofluorescence (qui est assez faible). L'autofluorescence correspond au flux provenant de composés naturellement fluorescent tels que flavine, NADH, porphyrine... présents dans les tissus vivants.

Dans le second cas en particulier, il y a lieu d'analyser les images (acquisition, traitement, identification des zones d'intérêt), de synchroniser la voie spectroscopie avec le passage sur les zones d'intérêt et enfin d'analyser le spectre correspondant. La mise en oeuvre du couplage dans ce second cas est envisagée selon deux variantes : un mode avec laser pulsé et un mode avec commutateur rapide.

La figure 1 présente le cas de l'utilisation de lasers pulsés pour exciter l'échantillon et ainsi obtenir une image et un spectre d'une image entière ou d'une (ou des) région(s) d'intérêt. Le fait d'utiliser un laser pulsé permet de s'affranchir de pertes supplémentaires introduites par l'ajout d'un composant sur la voie de spectroscopie comme on le verra dans le mode à commutation rapide. Une lame séparatrice 13 prélève vingt pour cent du flux lumineux provenant des filtres de réjections 11, 12. Le flux prélevé est ensuite introduit dans une fibre optique 21 alimentant le spectromètre 22.

Dans ce cas, il suffit donc d'allumer le laser uniquement sur les zones dites d'intérêt et de détecter le spectre associé à ces zones. Il s'agit d'une simple synchronisation sur l'illumination du tissu qui peut-être réalisée simplement par informatique. Cette solution est la plus simple à mettre en oeuvre.

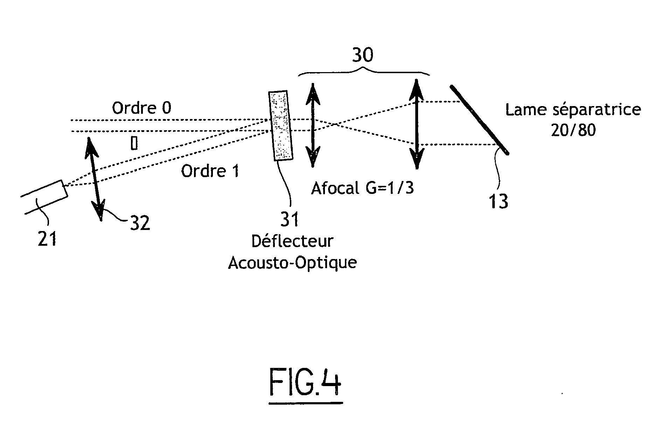

Le mode à commutation rapide préconise l'utilisation d'un système de filtrage très rapide placé à l'entrée du spectroscope (voir figure 4). Il est alors possible de faire passer le flux de fluorescence vers le spectroscope lorsque la position du balayage laser correspond au passage sur les zones d'intérêt en des temps très courts. Dans l'idéal, le dispositif doit commuter à chaque fibre, soit un temps de 1 µs (on balaie une ligne de fibre à la vitesse d'1µs/fibre). Dans la pratique, on intègre le flux d'un noyau (5 µm au niveau du tissu) par exemple, ce qui correspond à un temps d'intégration de quelques µs maximum. Comme on le voit sur la figure 4, les composants de cette voie spectroscopie sont les suivants :
- la lame séparatrice 13 de coefficient de transmission 80 % pour la voie imagerie et de réflexion 20 % pour la voie spectroscopie, afin de ne pas trop réduire le flux nécessaire pour former une image;
- Un dispositif 31 suffisamment rapide pour commuter à chaque fibre balayée ou sur une (ou des) zone(s) d'intérêt, préalablement définie(s). Il peut être mécanique, acousto-optique (31), un miroir... ;
- Un doublet achromatique 30 de focale 100mm afin de focaliser le faisceau dans la fibre optique.
- Une fibre optique 21, de diamètre de coeur 50 ou 100µm en fonction de la résolution souhaitée, d'ouverture numérique de 0,22; et
- Un spectroscope 22, dont les caractéristiques sont les suivantes : premièrement, un détecteur composé d'une CCD linéaire (2048 pixels) ou matricielle par exemple, d'une plage de longueurs d'onde comprise entre 200 et 1100nm, d'une sensibilité de 86 photons/coup (2.9x10-⁻¹⁷W/coup) et d'un rapport signal sur bruit de 250:1. Deuxièmement, un réseau de diffraction de 600 traits/mm, d'une efficacité supérieure à 30 %, d'une résolution comprise entre 0.3nm et 10.0nm FWHM et enfin d'une largeur de la fente de 200 µm.

Plusieurs dispositifs de commutation rapide sont envisageables :
1) Un "shutter" mécanique : il s'agit ici d'une plaque mise en mouvement par une platine de translation motorisée afin de laisser passer le faisceau lorsqu'on balaie une zone d'intérêt. La platine de translation doit avoir une résolution de quelques dixièmes de micromètre, un entraînement par un moteur pas à pas ou un moteur continu, une course de quelques millimètres. Sa vitesse de réaction dépend de la taille de la zone d'intérêt, elle est de préférence très importante.
2) Un miroir : un autre dispositif de commutation consiste à défléchir le faisceau lorsque le balayage est en dehors d'une zone d'intérêt, pour rejeter le signal "hors zone d'intérêt". Pour cela, on utilise un miroir, placé après la lame séparatrice, et ayant un temps de réponse de l'ordre de la microseconde pour un angle de quelques milliradians au minimum, et un fort taux de réflexion. La voie spectroscopique ne travaille donc plus en transmission mais en réflexion.
3) Un déflecteur acousto-optique conformément à la figure 4. Les composants nécessaires à cette configuration sont : un afocal 30 de grandissement 1/3 composé de deux doublets achromatiques afin de réduire la taille du faisceau pour entrer dans le déflecteur 31 dont l'ouverture est de 2mm. Ce déflecteur travaille sur la plage spectrale 400-800nm avec un temps de réponse inférieur à la microseconde (pour commuter à chaque fibre si possible). L'efficacité de déflection est de 90% et les pertes statiques sont minimisées (<10 %) afin de ne pas avoir de trop grandes pertes en transmission et un angle de déflection de quelques milliradians. Enfin, l'optique de focalisation 32 est placée dans la direction de déflection (ordre 1), puisque l'efficacité de déflection est de 90 % (il y a toujours 10 % du flux dans la direction de l'ordre 0).

Dans tous les cas de figure (solution "shutter" ou solution laser pulsé), on peut envisager des plug-ins informatiques (automatiques) capables de tracer la décroissance d'un pic de fluorescence en fonction du temps ou l'évolution du rapport entre deux pics de fluorescence au cours du temps et de l'espace. Ce sont des modules techniques faits sur mesure en fonction des besoins des utilisateurs.

Le choix des zones d'intérêt est fait soit par l'utilisateur, soit de manière automatique.

Bien sûr, l'invention n'est pas limitée aux exemples qui viennent d'être décrits et de nombreux aménagements peuvent être apportés à ces exemples sans sortir du cadre de l'invention. On peut envisager la réalisation d'image haute résolution, non confocale, au moyen d'un guide constitué de plusieurs milliers de fibres optiques dont les extrémités distales sont destinées à être placées à nue directement en contact de la surface de l'échantillon. Dans ce cas on peut notamment se servir des enseignements du document WO 2004/008952 adaptés selon la présente invention.

## Revendications

1. Procédé pour réaliser une image microscopique fibrée de fluorescence d'un échantillon, dans lequel :
- on balaye l'échantillon au moyen d'un signal d'excitation via un chemin optique comprenant au moins une fibre optique,
- on détecte le signal de fluorescence en provenance dudit échantillon, le signal d'excitation et le signal de fluorescence empruntant ce même chemin optique;
- on excite, via le chemin optique, au moins deux fluorophores contenus dans l'échantillon,
- on détecte, via le chemin optique, le signal de fluorescence de chacun desdits au moins deux fluorophores, et
- on élabore une image finale comportant des zones colorées en fonction desdits au moins deux fluorophores,
**caractérisé en ce qu'**on acquiert en outre un spectre de chaque image à partir d'une partie du signal provenant de l'échantillon via le chemin optique.

2. Procédé selon la revendication 1, **caractérisé en ce qu'**on excite simultanément lesdits au moins deux fluorophores.

3. Procédé selon la revendication 1, **caractérisé en ce qu'**on excite séquentiellement lesdits au moins deux fluorophores.

4. Procédé selon la revendication 2, **caractérisé en ce qu'**on détecte simultanément les signaux de fluorescence desdits au moins deux fluorophores.

5. Procédé selon l'une quelconque des revendications 1 à 3, **caractérisé en ce qu'**on détecte séquentiellement les signaux de fluorescence desdits au moins deux fluorophores.

6. Procédé selon l'une quelconque des revendications précédentes, **caractérisé en ce qu'**on balaye l'échantillon à une vitesse correspondant à l'acquisition d'un nombre d'images par seconde suffisant pour une utilisation en temps réel et **en ce que** l'on détecte les signaux de fluorescence à une fréquence de détection correspondant à une fréquence minimale d'échantillonnage des fibres une à une.

7. Procédé selon l'une quelconque des revendications précédentes, **caractérisé en ce que** pour élaborer ladite image finale, on élabore d'abord autant d'images primaires que de signaux de fluorescence détectés, on colore chaque image primaire suivant une couleur affectée au fluorophore correspondant, puis on superpose lesdites images primaires de façon à constituer l'image finale.

8. Système pour réaliser une image microscopique fibrée de fluorescence d'un échantillon (26), ce système comprenant :
- une unité de traitement(23, 24, 25),
- un chemin optique (7, 8) comportant au moins des moyens (7) de balayage du signal d'excitation dans l'échantillon, un guide d'image (8) comprenant au moins une fibre optique pour transporter le signal d'excitation vers l'échantillon et pour recueillir un signal de fluorescence en provenance dudit échantillon, le signal d'excitation et le signal de fluorescence empruntant ce même chemin optique;
- des moyens (1, 2) d'excitation pour exciter, via le chemin optique, au moins deux fluorophores contenus dans l'échantillon,
- des moyens (15, 18) de détection pour détecter, via le chemin optique, le signal de fluorescence de chacun desdits au moins deux fluorophores, et
- des moyens (25) de traitement au sein de l'unité de traitement pour élaborer une image finale comprenant des zones colorées en fonction desdits au moins deux fluorophores,
**caractérisé en ce que** les moyens d'excitation comprennent au moins deux émetteurs, chacun excitant l'un desdits au moins deux fluorophores.

9. Système selon la revendication 8, **caractérisé en ce que** les signaux de fluorescence émis par lesdits au moins deux fluorophores présentent des longueurs d'onde suffisamment éloignées l'une de l'autre de façon à ce que les signaux de fluorescence soient dissociables par filtrage.

10. Système selon la revendication 8 ou 9, **caractérisé en ce que** les deux émetteurs de signaux d'excitation sont deux lasers émettant respectivement à 488nm et 635nm, les deux fluorophores dans l'échantillon réagissant respectivement à ces deux longueurs d'onde.

11. Système selon l'une quelconque des revendications 8 à 10, **caractérisé en ce que** les moyens de détection comprennent un récepteur associé à un moyen de filtrage accordable tel qu'un filtre passe-bande accordable, qui laisse passer séquentiellement chacun des signaux de fluorescence émis par lesdits au moins deux fluorophores.

12. Système selon l'une quelconque des revendications 8 à 10, **caractérisé en ce que** les moyens de détection comprennent au moins deux récepteurs associés à un séparateur (14) qui est apte à envoyer, en fonction de la longueur d'onde, chaque signal de fluorescence vers un récepteur donné.

13. Système selon l'une quelconque des revendications 8 à 12, **caractérisé en ce que** les moyens de balayage balayent l'échantillon à une vitesse correspondant à l'acquisition d'un nombre d'images par seconde suffisant pour une utilisation en temps réel et **en ce que** les moyens de détection détectent les signaux de fluorescence à une fréquence de détection correspondant à une fréquence minimale d'échantillonnage des fibres une à une.

14. Système selon l'une quelconque des revendications 8 à 13, **caractérisé en ce que** le guide d'image est constitué de plusieurs milliers de fibres optiques, ce guide étant précédé par les moyens de balayage et suivi d'une tête optique pour focaliser le signal d'excitation dans l'échantillon.

15. Système selon l'une quelconque des revendications 8 à 13, **caractérisé en ce que** le guide d'image est constitué d'une fibre optique, les moyens de balayage étant intégrés dans une tête optique située entre le guide d'image et l'échantillon.

16. Système selon l'une quelconque des revendications 8 à 13, **caractérisé en ce que** le guide d'image est constitué de plusieurs milliers de fibres optiques dont les extrémités distales sont destinées à être placées à nue directement en contact de la surface de l'échantillon.

17. Système selon l'une quelconque des revendications 8 à 16, **caractérisé en ce qu'**il comprend en outre un spectromètre apte à élaborer un spectre à partir d'une partie du signal provenant de l'échantillon.

18. Système selon la revendication 17, **caractérisé en ce que** le spectromètre est associé à un obturateur dirigeant une partie du signal provenant de l'échantillon vers le spectromètre à des instants prédéterminés correspondant aux instants où le signal d'excitation balaye une zone d'intérêt.

19. Système selon la revendication 17, **caractérisé en ce que**, pour acquérir le spectre uniquement sur une zone d'intérêt d'une image, les moyens d'excitation comprennent au moins un laser pulsé haute fréquence, ce laser pulsé étant rendu actif uniquement lors du balayage de ladite zone d'intérêt.

20. Système selon l'une quelconque des revendications 8 à 19, **caractérisé en ce que** l'unité de traitement comprend des moyens de synchronisation des moyens d'excitation et des moyens de réception.

## Claims

1. Method for producing a fibre-type fluorescence microscopic image of a sample, in which:
- the sample is scanned by means of an excitation signal via an optical path comprising at least one optical fibre,
- the fluorescence signal originating from said sample is detected, the excitation signal and the fluorescence signal taking this same optical path;
- at least two fluorophores contained in the sample are excited via the optical path,
- the fluorescence signal of each of said at least two fluorophores is detected via the optical path, and
- a final image is produced, said final image comprising areas which are coloured as a function of said at least two fluorophores,
**characterized in that** a spectrum of each image is also acquired using a part of the signal originating from the sample via the optical path.

2. Method according to claim 1, **characterized in that** said at least two fluorophores are excited simultaneously.

3. Method according to claim 1, **characterized in that** said at least two fluorophores are excited sequentially.

4. Method according to claim 2, **characterized in that** the fluorescence signals of said at least two fluorophores are detected simultaneously.

5. Method according to any one of claims 1 to 3, **characterized in that** the fluorescence signals of said at least two fluorophores are detected sequentially.

6. Method according to any one of the preceding claims, **characterized in that** the sample is scanned at a speed corresponding to the acquisition of a number of images per second sufficient for a real time use, and **in that** the fluorescence signals are detected at a detection frequency corresponding to a minimum frequency of sampling of the fibres one-by-one.

7. Method according to any one of the preceding claims, **characterized in that** in order to produce said final image, as many primary images as detected fluorescence signals are produced, each primary image is coloured according to a colour assigned to the corresponding fluorophore, then said primary images are superimposed so as to make up the final image.

8. System for producing a fibre-type fluorescence microscopic image of a sample (26), this system comprising:
- a processing unit (23, 24, 25),
- an optical path (7, 8) comprising at least means (7) for scanning the excitation signal in the sample, an image guide (8) comprising at least one optical fibre for conveying the excitation signal towards the sample and for collecting a fluorescence signal originating from said sample, the excitation signal and the fluorescence signal taking this same optical path;
- excitation means (1, 2) in order to excite, via the optical path, at least two fluorophores contained in the sample,
- detection means (15, 18) for detecting, via the optical path, the fluorescence signal of each of said at least two fluorophores, and
- processing means (25) inside the processing unit in order to produce a final image comprising areas which are coloured as a function of said at least two fluorophores.
**characterized in that** the excitation means include at least two emitters, each exciting one of said at least two fluorophores.

9. System according to claim 8, **characterized in that** the fluorescence signals emitted by said at least two fluorophores have wavelengths which are sufficiently distant from one another so that the fluorescence signals can be split by filtering.

10. System according to claim 8 or 9, **characterized in that** the two emitters of excitation signals are two lasers emitting respectively at 488 nm and 635 nm, the two fluorophores in the sample reacting respectively to these two wavelengths.

11. System according to any one of claims 8 to 10, **characterized in that** the detection means comprise a receiver combined with a tuneable filtering means such as a tuneable band-pass filter, which allows each of the fluorescence signals emitted by said at least two fluorophores to pass sequentially.

12. System according to any one of claims 8 to 10, **characterized in that** the detection means include at least two receivers combined with a separator (14) which is able to send, as a function of the wavelength, each fluorescence signal towards a given receiver.

13. System according to any one of claims 8 to 12, **characterized in that** the scanning means scan the sample at a speed corresponding to the acquisition of a number of images per second sufficient for a real time use and **in that** the detection means detect the fluorescence signals at a detection frequency corresponding to a minimum frequency of sampling of the fibres one-by-one.

14. System according to any one of claims 8 to 13, **characterized in that** the image guide is constituted by several thousands of optical fibres, this guide being preceded by the scanning means and followed by an optical head in order to focus the excitation signal in the sample.

15. System according to any one of claims 8 to 13, **characterized in that** the image guide is constituted by one optical fibre, the scanning means being integrated into an optical head situated between the image guide and the sample.

16. System according to any one of claims 8 to 13, **characterized in that** the image guide is constituted by several thousands of optical fibres the distal ends of which are intended to be placed bare directly in contact with the surface of the sample.

17. System according to any one of claims 8 to 16, **characterized in that** it also comprises a spectrometer which is able to produce a spectrum using a part of the signal originating from the sample.

18. System according to claim 17, **characterized in that** the spectrometer is combined with a shutter directing a part of the signal originating from the sample towards the spectrometer at predetermined times corresponding to the times when the excitation signal scans an area of interest.

19. System according to claim 17, **characterized in that**, in order to acquire the spectrum only on an area of interest of an image, the excitation means include at least one high-frequency pulsed laser, this pulsed laser being activated only during the scanning of said area of interest.

20. System according to any one of claims 8 to 19, **characterized in that** the processing unit comprises means for synchronization of the excitation means and the receiving means.

## Patentansprüche

1. Verfahren zum Erzeugen einer fluoreszenzmikroskopischen Faserabbildung einer Probe, wobei
- die Probe mittels eines Anregungssignals über einen optischen Weg abgetastet wird, der zumindest eine optische Faser aufweist,
- das von der Probe stammende Fluoreszenzsignal erfasst wird, wobei das Anregungssignal und das Fluoreszenzsignal diesen gleichen optischen Weg nehmen;
- über den optischen Weg zumindest zwei in der Probe enthaltene Fluorophore angeregt werden,
- über den optischen Weg das Fluoreszenzsignal eines jeden der zumindest zwei Fluorophore erfasst wird, und
- ein Endbild erstellt wird, das in Abhängigkeit von den zumindest zwei Fluorophoren gefärbte Bereiche enthält,
**dadurch gekennzeichnet, dass** ferner ein Spektrum von jedem Bild ausgehend von einem Teil des Signals erhalten wird, das über den optischen Weg von der Probe stammt.

2. Verfahren nach Anspruch 1, **dadurch gekennzeichnet, dass** die zumindest zwei Fluorophore gleichzeitig angeregt werden.

3. Verfahren nach Anspruch 1, **dadurch gekennzeichnet, dass** die zumindest zwei Fluorophore sequentiell angeregt werden.

4. Verfahren nach Anspruch 2, **dadurch gekennzeichnet, dass** die Fluoreszenzsignale der zumindest zwei Fluorophore gleichzeitig erfasst werden.

5. Verfahren nach einem der Ansprüche 1 bis 3, **dadurch gekennzeichnet, dass** die Fluoreszenzsignale der zumindest zwei Fluorophore sequentiell erfasst werden.

6. Verfahren nach einem der vorangehenden Ansprüche, **dadurch gekennzeichnet, dass** die Probe mit einer Geschwindigkeit abgetastet wird, die der Aufnahme einer Anzahl von Bildern pro Sekunde entspricht, die für eine Verwendung in Echt-Zeit ausreicht, und dass die Fluoreszenzsignale mit einer Erfassungsfrequenz erfasst werden, die einer minimalen Abtastfrequenz zum Abtasten der Fasern einzeln nacheinander entspricht.

7. Verfahren nach einem der vorangehenden Ansprüche, **dadurch gekennzeichnet, dass** zum Erstellen des Endbildes zunächst ebenso viele Primärbilder wie erfasste Fluoreszenzsignale erstellt werden, jedes Primärbild gemäß einer dem entsprechenden Fluorophor zugewiesenen Farbe gefärbt wird, wonach die Primärbilder so übereinandergelegt werden, dass sie das Endbild bilden.

8. System zum Erzeugen einer fluoreszenzmikroskopischen Faserabbildung einer Probe (26), wobei dieses System enthält:
- eine Verarbeitungseinheit (23, 24, 25),
- einen optischen Weg (7, 8), der zumindest Abtastmittel (7) zum Abtasten des Anregungssignals in der Probe und eine Bildführung (8) enthält, die zumindest eine Lichtleitfaser zum Weiterleiten des Anregungssignals zur Probe und zum Aufnehmen eines von der Probe stammenden Fluoreszenzsignals aufweist, wobei das Anregungssignal und das Fluoreszenzsignal den gleichen optischen Weg nehmen;
- Anregungsmittel (1, 2) zum Anregen von zumindest zwei in der Probe enthaltenen Fluorophore über den optischen Weg,
- Erfassungsmittel (15, 18) zum Erfassen des Fluoreszenzsignals eines jeden der zumindest zwei Fluorophore über den optischen Weg, und
- Verarbeitungsmittel (25) innerhalb der Verarbeitungseinheit, um ein Endbild zu erstellen, das in Abhängigkeit von den zumindest zwei Fluorophoren gefärbte Bereiche enthält,
**dadurch gekennzeichnet, dass** die Anregungsmittel zumindest zwei Sender enthalten, die jeweils einen der zumindest zwei Fluorophore anregen.

9. System nach Anspruch 8, **dadurch gekennzeichnet, dass** die von den zumindest zwei Fluorophoren ausgegebenen Fluoreszenzsignale Wellenlängen aufweisen, die weit genug voneinander entfernt sind, dass die Fluoreszenzsignale durch Filterung trennbar sind.

10. System nach Anspruch 8 oder 9, **dadurch gekennzeichnet, dass** die beiden Sender von Anregungssignalen zwei Laser sind, die bei 488 nm bzw. 635 nm emittieren, wobei die beiden Fluorophore in der Probe bei diesen beiden jeweiligen Wellenlängen ansprechen.

11. System nach einem der Ansprüche 8 bis 10, **dadurch gekennzeichnet, dass** die Erfassungsmittel einen Empfänger aufweisen, dem ein abstimmbares Filtermittel, wie etwa ein abstimmbares Bandfilter, zugeordnet ist, das jedes der von den zumindest zwei Fluorophoren emittierten Fluoreszenzsignale sequentiell durchlässt.

12. System nach einem der Ansprüche 8 bis 10, **dadurch gekennzeichnet, dass** die Erfassungsmittel zumindest zwei Empfänger aufweisen, denen ein Trenner (14) zugeordnet ist, der in der Lage ist, in Abhängigkeit von der Wellenlänge jedes Fluoreszenzsignal einem gegebenen Empfänger zuzusenden.

13. System nach einem der Ansprüche 8 bis 12, **dadurch gekennzeichnet, dass** die Abtastmittel die Probe mit einer Geschwindigkeit abtasten, die der Aufnahme einer Anzahl von Bildern pro Sekunde entspricht, die für eine Verwendung in Echt-Zeit ausreicht, und dass die Erfassungsmittel die Fluoreszenzsignale bei einer Erfassungsfrequenz erfassen, die einer minimalen Abtastfrequenz zum Abtasten der Fasern einzeln nacheinander entspricht.

14. System nach einem der Ansprüche 8 bis 13, **dadurch gekennzeichnet, dass** die Bildführung aus mehreren Tausend Lichtleitfasern besteht, wobei dieser Führung die Abtastmittel vorausgehen und ihr ein optischer Kopf zum Fokussieren des Anregungssignals in der Probe folgt.

15. System nach einem der Ansprüche 8 bis 13, **dadurch gekennzeichnet, dass** die Bildführung aus einer Lichtleitfaser besteht, wobei die Abtastmittel in einem optischen Kopf integriert sind, der zwischen Bildführung und Probe liegt.

16. System nach einem der Ansprüche 8 bis 13, **dadurch gekennzeichnet, dass** die Bildführung aus mehreren Tausend Lichtleitfasern besteht, deren distale Enden dazu bestimmt sind, unmittelbar mit der Oberfläche der Probe in bloßem Kontakt gesetzt zu werden.

17. System nach einem der Ansprüche 8 bis 16, **dadurch gekennzeichnet, dass** es ferner ein Spektrometer umfasst, das in der Lage ist, ein Spektrum ausgehend von einem Teil des von der Probe stammenden Signals zu erstellen.

18. System nach Anspruch 17, **dadurch gekennzeichnet, dass** dem Spektrometer ein Verschluss zugeordnet ist, der einen Teil des von der Probe stammenden Signals zu vorbestimmten Zeitpunkten zu dem Spektrometer lenkt, die den Zeitpunkten entsprechen, wo das Anregungssignal einen relevanten Bereich abtastet.

19. System nach Anspruch 17, **dadurch gekennzeichnet, dass** zum Erhalt des Spektrums nur an einem relevanten Bereich eines Bilds die Anregungsmittel zumindest einen gepulsten Hochfrequenzlaser enthalten, wobei dieser gepulste Laser nur beim Abtasten des relevanten Bereichs aktiviert wird.

20. System nach einem der Ansprüche 8 bis 19, **dadurch gekennzeichnet, dass** die Verarbeitungseinheit Synchronisationsmittel zum Synchronisieren der Anregungsmittel und der Empfangsmittel aufweist.
